# EUROPÄISCHE PATENTSCHRIFT

(11) **EP 1 475 258 B1**
(45) Veröffentlichungstag und Bekanntmachung des Hinweises auf die Patenterteilung: **30.08.2006**
(21) Anmeldenummer: 04010754.2
(22) Anmeldetag: 06.05.2004
(51) Int. Cl.: B60H 1/00

(54) **Luftmischvorrichtung für eine Klimaanlage**
Air mixing device for an air conditioner
Dispositif de mélange d'air pour climatisation

(30) Priorität: 07.05.2003 DE 10320577
(43) Veröffentlichungstag der Anmeldung: 10.11.2004
(73) Patentinhaber: Behr GmbH & Co. KG, 70469 Stuttgart (DE)
(72) Erfinder: Hegner, Hilmar, 71364 Winnenden (DE); Klingler, Dietrich, 73540 Heubach (DE); Voigt, Klaus, 74321 Bietigheim-Bissingen (DE)
(74) Vertreter: Grauel, Andreas

(56) Entgegenhaltungen:
- EP-A- 0 709 241
- EP-A- 1 038 704
- EP-B- 0 560 774
- US-A- 5 025 711

## Beschreibung

Die Erfindung betrifft eine Luftmischvorrichtung für eine Klimaanlage, insbesondere für ein Kraftfahrzeug, gemäß dem Oberbegriff des Anspruchs 1.

Aus der DE 197 57 194 A1 ist eine Luftmischvorrichtung zur Steuerung der Luftmenge und Luftverteilung in Heizungs- und Klimageräten bekannt, die ein Stellelement aufweist, das um eine Drehachse gedreht wird, die in Richtung des Luftstroms ausgerichtet ist. Dabei ist das Stellelement insbesondere in einem Rahmen aufgebaut, der mit dem Stellelement in einen Luftkanal geschoben wird. Das Stellelement wird gemäß einer Variante durch eine Scheibe mit mindestens einer Öffnung gebildet, wobei die Öffnung das Regelverhalten des Stellelements bestimmt. Die Scheibe hat hierbei vorzugsweise eine kreisförmige oder kreissegmentförmige Gestalt. Eine derartige Luftmischvorrichtung lässt jedoch noch Wünsche offen.

Aus der gattungsgemäßen US 5 025 711 ist eine Luftmischvorrichtung mit zwei Scheibenförmigen Stellelementen die miteinander mittels einer Übertragungsvorrichtung verbunden sind offenbart. Eine derartige Vorrichtung lässt ebenfalls Wünsche offen.

Es ist Aufgabe der Erfindung, eine verbesserte Luftmischvorrichtung zur Verfügung zu stellen.

Diese Aufgabe wird gelöst durch eine Luftmischvorrichtung mit den Merkmalen des Anspruchs 1. Vorteilhafte Ausgestaltungen sind Gegenstand der Unteransprüche.

Erfindungsgemäß ist eine Luftmischvorrichtung mit mindestens zwei scheibenförmigen Stellelementen die miteinander mittels einer Übertragungsvorrichtung verbunden sind derart ausgebildet, dass die Übertragungsvorrichtung exzentrisch bezüglich mindestens eines der Stellelemente angeordnet ist.

Bevorzugt sind die Stellelemente parallel zueinander angeordnet, insbesondere weisen die Stellelemente eine gemeinsame Drehachse auf.

Die scheibenförmigen Stellelemente sind bevorzugt kreisförmig ausgebildet, wobei sie einen kreissegmentartigen Ausschnitt aufweisen und ein umlaufender Rand vorgesehen ist. Jedoch sind auch andere Ausgestaltungen möglich. Beispielsweise können die scheibenförmigen Stellelemente halbkreisförmig ausgebildet sein, mehrere Ausschnitte können vorgesehen sein oder die Ausschnitte können durch Bohrungen gebildet sein.

Bevorzugt wird die Übertragungsvorrichtung durch eine vorzugsweise am Luftführungsgehäuse fest gelagerten, drehbaren Welle gebildet, die Drehbewegungen von einem Stellelement an das andere Stellelement überträgt. Die Übertragung kann vorzugsweise mittels einer Verzahnung oder aber mittels eines Reibschlusses zwischen Stellelement und Welle erfolgen. Vorzugsweise verläuft die Drehachse der Übertragungsvorrichtung parallel zu mindestens einer Drehachse eines Stellelements, vorzugsweise allen Drehachsen aller Stellelemente.

Die Luftmischvorrichtung weist vorzugsweise eine Verteilerklappe auf, welche nach einem Mischraum angeordnet ist und die temperierte Luft bedarfsgerecht verteilt. Dabei ist die Verteilerklappe vorzugsweise drehbar, insbesondere drehbar um die gleiche Drehachse wie die Stellelemente, ausgebildet.

Bevorzugt ist ein gemeinsamer Antrieb für die Stellelemente vorgesehen, welche vorzugsweise ausschließlich gleichzeitig betätigbar sind. Dabei sind die Stellelemente jeweils in der in der gleichen Stellung bezüglich einem zu verschließenden oder freizugebenden Luftkanal angeordnet.

Im folgenden wird die Erfindung anhand eines Ausführungsbeispiels unter Bezugnahme auf die Zeichnung im einzelnen erläutert. In der Zeichnung zeigen:
- Fig. 1: einen Schnitt durch eine erfindungsgemäße Luftmischvorrichtung mit angedeutetem Strömungsverlauf,

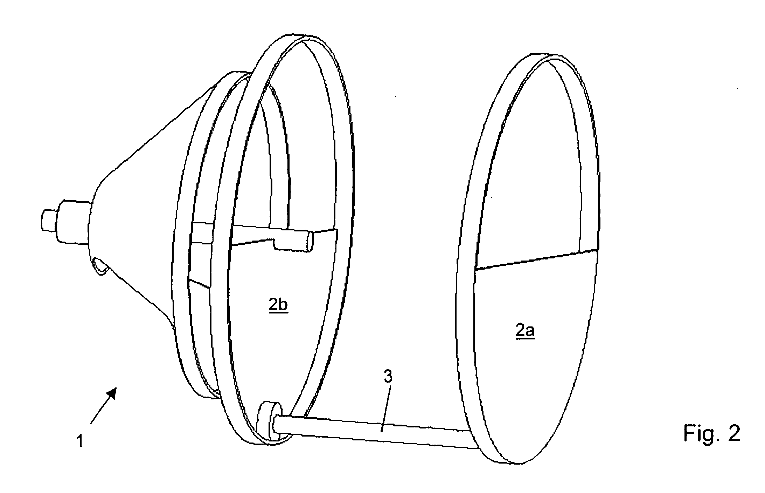

- Fig. 2: eine perspektivische Ansicht der Stellelemente der Luftmischvorrichtung von Fig. 1,
- Fig. 3: eine perspektivische Ansicht der Luftmischvorrichtung von Fig. 1 in einer Mischstellung,
- Fig. 4: eine perspektivische Ansicht der Luftmischvorrichtung von Fig. 1 in der Kaltstellung, und
- Fig. 5: eine perspektivische Ansicht der Luftmischvorrichtung von Fig. 1 in der Warmstellung,

Eine erfindungsgemäße Luftmischvorrichtung 1 weist zwei Stellelemente 2a und 2b auf, die mittels einer durch eine drehbar gelagerte Welle gebildeten Übertragungsvorrichtung 3 miteinander verbunden sind. Die beiden Stellelemente 2a, 2b sind um eine gemeinsame Drehachse, die parallel zur Längsrichtung der Welle verläuft, drehbar in einem Luftführungsgehäuse 4 angeordnet, wobei die Ausgestaltung und Anordnung der Stellelemente 2a, 2a sowie der Übertragungsvorrichtung 3 an späterer Stelle beschrieben wird.

Im Luftführungsgehäuse 4 ist, in Luftströmungsrichtung gesehen, zuerst ein Luft förderndes Gebläse 5 angeordnet. Diesem Gebläse 5 nachfolgend ist ein der Luftkühlung dienender Verdampfer 6 angeordnet. Diesem Verdampfer 6 ist ein erster Luftkanal 6a, der im folgenden auch als Kaltluftkanal bezeichnet wird, zugeordnet. Ferner ist ein zweiter Luftkanal 7a vorgesehen, in welchem ein der Lufterwärmung dienender Heizkörper 7 angeordnet ist, der im folgenden auch als Warmluftkanal bezeichnet wird. Die beiden Luftkanäle 6a, 7a führen, voneinander durch eine Wand getrennt, zu einem Mischraum 8 mit mehreren Luftauslässen, die gemäß dem vorliegenden Ausführungsbeispiel von einer Verteilerklappe 9 nach Bedarf freigegeben oder verschlossen werden, und welche die temperierte Luft über weitere Luftkanäle beispielsweise einem Fußraum und/oder der Windschutzscheibe zuführen.

Jedes der beiden Stellelemente 2a, 2b hat eine scheibenförmige Gestalt, wobei es einen stabilisierenden, in axialer Richtung verlaufenden, ringförmigen Rand mit einer Innenverzahnung (nicht dargestellt) und einen kreissegmentartigen Ausschnitt, welcher gemäß dem Ausführungsbeispiel der Hälfte der vom Rand begrenzten Kreisfläche entspricht, aufweist. Die Innenverzahnung wirkt mit einer an der Übertragungsvorrichtung 3 vorgesehenen Außenverzahnung zusammen, wobei die Innenverzahnung der beiden Stellelemente 2a, 2b und die beiden denselben zugeordneten Außenverzahnungen der Übertragungsvorrichtung 3 jeweils einander entsprechend ausgebildet sind, so dass bei einer Betätigung die beiden Stellelemente 2a, 2b jeweils um den gleichen Winkel und in die gleiche Richtung gedreht werden. Auf Grund der Ausgestaltung des kreissegmentartigen Ausschnitts wird so sichergestellt, dass die Gesamt-Öffnungsfläche stets gleich groß ist, und dass daher der Strömungswiderstand und somit auch die GesamtLuftmenge bei einer Drehung der beiden Stellelemente 2a, 2b annähernd konstant bleibt.

Die Betätigung der beiden Stellelemente 2a, 2b erfolgt mittels eines nicht dargestellten Betätigungselements über eine in Längsrichtung der Drehachse verlaufende Welle 10, die fest mit dem zweiten Stellelement 2b verbunden ist. Die Drehbewegung der Welle 10 wird so direkt an das zweite Stellelement 2b weitergegeben. In Folge einer Drehung des zweiten Stellelements 2b dreht sich die drehbar am Luftführungsgehäuse 4 gelagerte Welle der Übertragungsvorrichtung 3, welche die Drehbewegung an das erste Stellelement 2a weitergibt, welches sich somit synchron zum zweiten Stellelement 2b dreht.

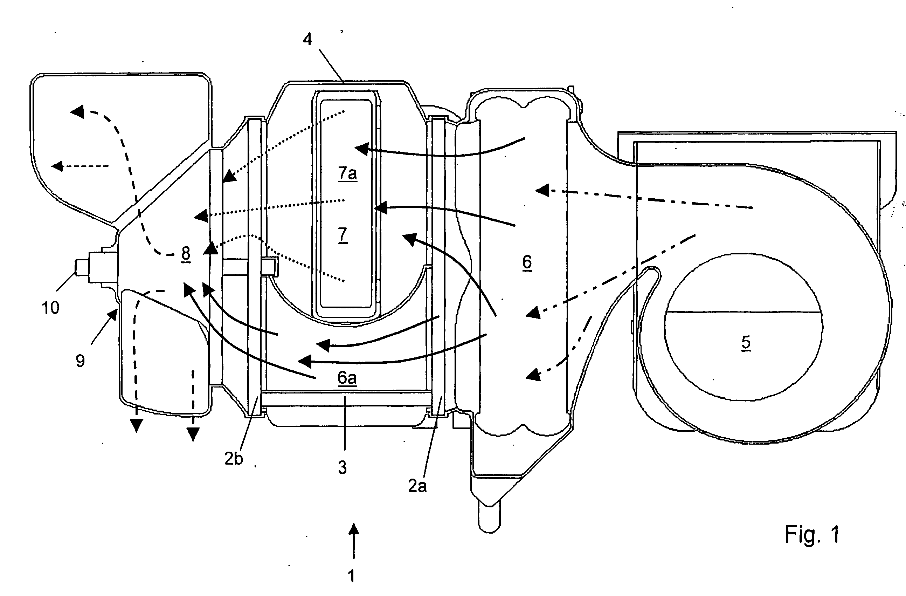

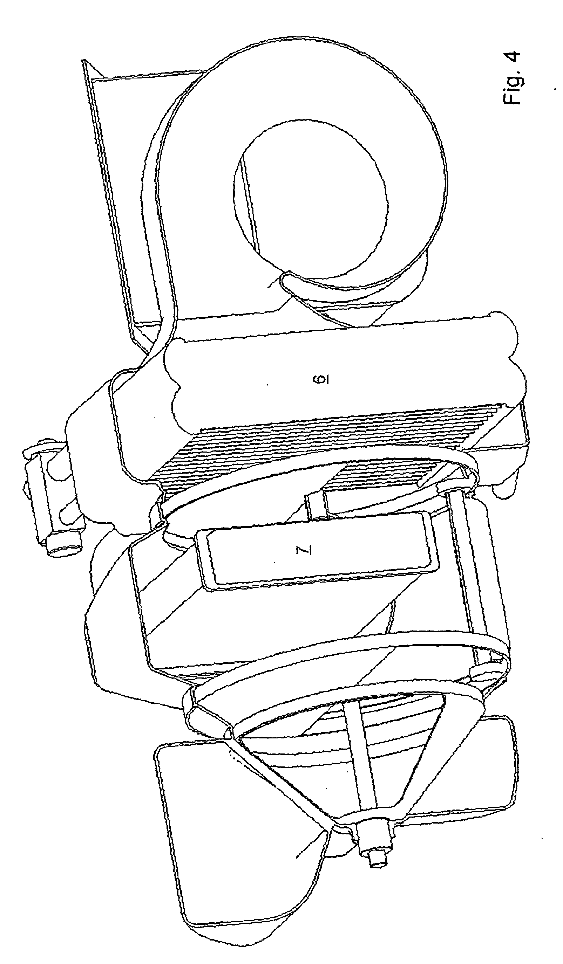

Unter Bezugnahme auf die Figuren 1, 3, 4 und 5 wird im folgenden die Funktion der Luftmischvorrichtung 1 näher erläutert. Hierbei wird zunächst die in Fig. 4 dargestellte Kaltstellung des Luftmischvorrichtung 1 beschrieben. Ausgehend vom Gebläse 5 wird von der Umgebung oder dem Fahrzeuginnenraum kommende und zu temperierende Luft, in Fig. 1 angedeutet durch Pfeile mit einer Strich-Punkt-Punkt-Linie, durch einen Verdampfer 6 geleitet und dadurch abgekühlt. Auf Grund der Stellung der Luftmischvorrichtung 1 wird der gesamte Luftstrom, der vorliegend den Kaltluftstrom bildet, durch den ersten Luftkanal 6a am Heizkörper 7 vorbei geführt. Dieser Kaltluftstrom ist in Fig. 1 durch Pfeile mit einer durchgezogenen Linie dargestellt. Bei der in Fig. 4 dargestellten Kaltstellung der Luftmischvorrichtung 1 wird durch die beiden kreissegmentartigen Ausschnitte der beiden Stellelemente 2a, 2b ausschließlich dieser erste Luftkanal 6a freigegeben und der zweite Luftkanal 6b wird vollständig verschlossen. Somit gelangt ausschließlich kalte Luft in die Mischkammer 8, von wo aus diese mittels der Verteilerklappe 9 entsprechend den Anforderungen verteilt wird.

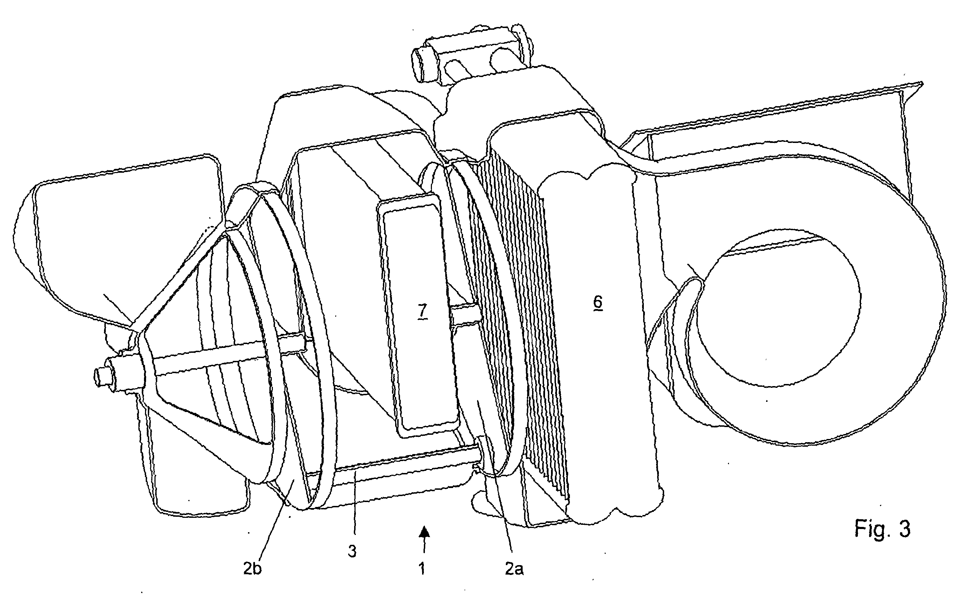

Erfolgt eine Verdrehung der beiden Stellelemente 2a, 2b über eine Betätigung der Betätigungsvorrichtung, so werden die beiden Stellelemente 2a, 2b, wie zurvor beschrieben synchron um einen Winkel verdreht und nehmen eine Mischstellung ein, wie in Fig. 3 dargestellt. Auf Grund der Drehung, gemäß dem Ausführungsbeispiel um 90°, verändern die beiden kreissegmentartigen Ausschnitte der beiden Stellelemente 2a, 2b ihre Position und geben einen Teil, vorliegend die Hälfte, des zweiten Luftkanals 7a frei, wohingegen ein Teil, vorliegend die Hälfte, des ersten Luftkanals 6a verschlossen wird. Somit gelangt, wie zuvor beschrieben, ein Teil-Luftstrom durch den ersten Luftkanal 6a, vorbei am Verdampfer 6 direkt in die Mischkammer 8. Ein zweiter Teil-Luftstrom gelangt durch den zweiten Luftkanal 7a, der vorbei am Heizkörper führt, welcher diesen Teil-Luftstrom erwärmt, was in Fig. 1 durch Pfeile mit einer gepunkteten Linie dargestellt ist, in die Mischkammer 8, wo sich die beiden Teil-Luftströme mischen, was in Fig. 1 durch Pfeile mit einer gestrichelten Linie dargestellt ist. Die Mischung kann stufenlos erfolgen. Auf Grund von Reibung, beispielsweise der Welle 10 und der Welle der Übertragungsvorrichtung 3, erfolgt kein selbsttätiges Verstellen der Luftmischvorrichtung 1.

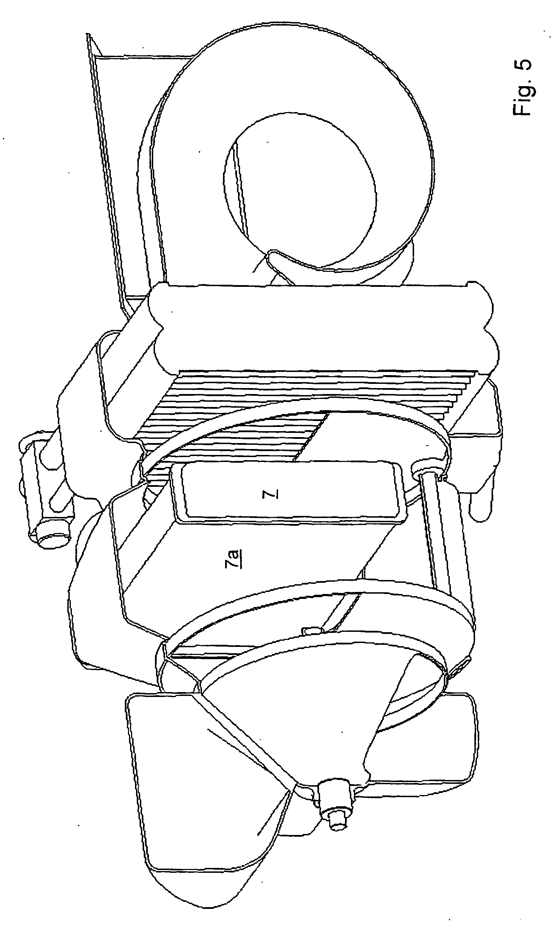

In Fig. 5 ist die Warmstellung dargestellt, bei der die beiden kreissegmentartigen Ausschnitte der beiden Stellelemente 2a, 2b den gesamten Luftstrom durch den Heizkörper 7 leiten, so dass dieser maximal erwärmt wird.

### Bezugszeichenliste

- 1: Luftmischvorrichtung
- 2a: erstes Stellelement
- 2b: zweites Stellelement
- 3: Übertragungsvorrichtung
- 4: Luftführungsgehäuse
- 5: Gebläse
- 6: Verdampfer
- 7: Heizkörper
- 8: Mischraum
- 9: Verteilerklappe
- 10: Welle

## Patentansprüche

1. Luftmischvorrichtung mit mindestens zwei scheibenförmigen Stellelementen (2a, 2b) die miteinander mittels einer Übertragungsvorrichtung (3) verbunden sind, **dadurch gekennzeichnet, dass** die Übertragungsvorrichtung (3) exzentrisch bezüglich mindestens eines der Stellelemente (2a, 2b) angeordnet ist.

2. Luftmischvorrichtung nach Anspruch 1, **dadurch gekennzeichnet, dass** die Stellelemente (2a, 2b) parallel zueinander angeordnet sind.

3. Luftmischvorrichtung nach Anspruch 1 oder 2, **dadurch gekennzeichnet, dass** die Stellelemente (2a, 2b) Drehachsen aufweisen, die zusammenfallen.

4. Luftmischvorrichtung nach einem der vorhergehenden Ansprüche, **dadurch gekennzeichnet, dass** die Stellelemente (2a, 2b) einen kreissegmentartigen Ausschnitt aufweisen.

5. Luftmischvorrichtung nach einem der vorhergehenden Ansprüche, **dadurch gekennzeichnet, dass** die Übertragungsvorrichtung (3) durch eine Welle gebildet ist.

6. Luftmischvorrichtung nach einem der vorhergehenden Ansprüche, **dadurch gekennzeichnet, dass** die Übertragungsvorrichtung (3) durch eine Welle gebildet ist, die parallel zu mindestens einer Drehachse eines Stellelements (2a, 2b) angeordnet ist.

7. Luftmischvorrichtung nach einem der vorhergehenden Ansprüche, **dadurch gekennzeichnet, dass** die Übertragungsvorrichtung (3) parallel zur Drehachse beider Stellelemente (2a, 2b) angeordnet ist.

8. Luftmischvorrichtung nach einem der vorhergehenden Ansprüche, **dadurch gekennzeichnet, dass** die Luftmischvorrichtung (1) eine Verteilerklappe (9) aufweist.

9. Luftmischvorrichtung nach Anspruch 8, **dadurch gekennzeichnet, dass** die Verteilerklappe (9) um eine Drehachse drehbar ist, die mit der Drehachse mindestens eines der Stellelemente (2a, 2b) zusammenfällt.

10. Luftmischvorrichtung nach einem der vorhergehenden Ansprüche, **dadurch gekennzeichnet, dass** ein gemeinsamer Antrieb für die Stellelemente (2a, 2b) vorgesehen ist.

11. Luftmischvorrichtung nach einem der vorhergehenden Ansprüche, **dadurch gekennzeichnet, dass** die Stellelemente (2a, 2b) ausschließlich gleichzeitig betätigbar sind.

12. Luftmischvorrichtung nach Anspruch 11, **dadurch gekennzeichnet, dass** in den einzelnen Stellungen der Stellelemente (2a, 2b) jedes Stellelement (2a, 2b) in der gleichen Stellung bezüglich einem zu verschließenden oder freizugebenden Luftkanal (6a, 7a) angeordnet ist.

## Claims

1. An air mixing device having at least two disc-shaped control elements (2a, 2b) which are connected to one another by means of a transmission device (3),
**characterised in that**
the transmission device (3) is positioned eccentrically in relation to at least one of the control elements (2a, 2b)

2. An air mixing device in accordance with claim 1,
**characterised in that**
the control elements (2a, 2b) are positioned parallel to one another.

3. An air mixing device in accordance with claim 1 or 2,
**characterised in that**
the control elements (2a, 2b) have axes of rotation which coincide.

4. An air mixing device in accordance with one of the preceding claims,
**characterised in that**
the control elements (2a, 2b) have a cut-out shaped like a segment of a circle.

5. An air mixing device in accordance with one of the preceding claims,
**characterised in that**
the transmission device (3) takes the form of a shaft.

6. An air mixing device in accordance with one of the preceding claims,
**characterised in that**
the transmission device (3) takes the form of a shaft which is positioned parallel to at least one axis or rotation of a control element (2a, 2b).

7. An air mixing device in accordance with one of the preceding claims,
**characterised in that**
the transmission device (3) is positioned parallel to the axis of rotation of the two control elements (2a, 2b).

8. An air mixing device in accordance with one of the preceding claims,
**characterised in that**
the air mixing device (1) has a distribution valve (9).

9. An air mixing device in accordance with claim 8,
**characterised in that**
the distribution valve (9) is able to rotate about an axis of rotation which coincides with the axis of rotation of at least one of the control elements (2a, 2b).

10. An air mixing device in accordance with one of the preceding claims,
**characterised in that**
a common drive is provided for the control elements (2a, 2b).

11. An air mixing device in accordance with one of the preceding claims,
**characterised in that**
the control elements (2a, 2b) can only be actuated simultaneously.

12. An air mixing device in accordance with claim 11,
**characterised in that**
in the individual positions of the control elements (2a, 2b) each control element (2a, 2b) is positioned in the same position in relation to an air duct (6a, 7a) which is to be closed or opened.

## Revendications

1. Dispositif de mélange d'air avec au moins deux éléments de réglage (2a, 2b) en forme de disque, qui sont reliés entre eux au moyen d'un dispositif de transmission (3), **caractérisé en ce que** le dispositif de transmission (3) est disposé de façon excentrée par rapport à au moins l'un des éléments de réglage (2a, 2b).

2. Dispositif de mélange d'air selon la revendication 1, **caractérisé en ce que** les éléments de réglage (2a, 2b) sont disposés parallèlement entre eux.

3. Dispositif de mélange d'air selon la revendication 1 ou 2, **caractérisé en ce que** les éléments de réglage (2a, 2b) présentent des axes de rotation qui coïncident.

4. Dispositif de mélange d'air selon l'une quelconque des revendications précédentes, **caractérisé en ce que** les éléments de réglage (2a, 2b) présentent une découpe en forme de segment de cercle.

5. Dispositif de mélange d'air selon l'une quelconque des revendications précédentes, **caractérisé en ce que** le dispositif de transmission (3) est formé par un arbre.

6. Dispositif de mélange d'air selon l'une quelconque des revendications précédentes, **caractérisé en ce que** le dispositif de transmission (3) est formé par un arbre qui est disposé parallèlement à au moins un axe de rotation d'un élément de réglage (2a, 2b).

7. Dispositif de mélange d'air selon l'une quelconque des revendications précédentes, **caractérisé en ce que** le dispositif de transmission (3) est disposé parallèlement à l'axe de rotation des deux éléments de réglage (2a, 2b).

8. Dispositif de mélange d'air selon l'une quelconque des revendications précédentes, **caractérisé en ce que** le dispositif de mélange d'air (1) présente un volet de distribution (9).

9. Dispositif de mélange d'air selon la revendication 8, **caractérisé en ce que** le volet de distribution (9) peut tourner autour d'un axe de rotation qui coïncide avec l'axe de rotation d'au moins l'un des éléments de réglage (2a, 2b).

10. Dispositif de mélange d'air selon l'une quelconque des revendications précédentes, **caractérisé en ce qu'**un entraînement commun est prévu pour les éléments de réglage (2a, 2b).

11. Dispositif de mélange d'air selon l'une quelconque des revendications précédentes, **caractérisé en ce que** les éléments de réglage (2a, 2b) peuvent être actionnés uniquement de façon simultanée.

12. Dispositif de mélange d'air selon la revendication 11, **caractérisé en ce que**, dans les différentes positions des éléments de réglage (2a, 2b), chaque élément de réglage (2a, 2b) est disposé dans la même position par rapport à un canal d'air (6a, 7a) à fermer ou à libérer.
